# EUROPEAN PATENT SPECIFICATION

(11) **EP 2 180 651 B1**
(45) Date of publication and mention of the grant of the patent: **12.02.2014**
(21) Application number: 07855917.6
(22) Date of filing: 29.12.2007
(51) Int. Cl.: H04L 12/18, H04W 56/00, H04L 29/06

(54) **A METHOD FOR THE SYNCHRONIZATION OF THE MULTIMEDIA BROADCAST/MULTICAST**
VERFAHREN ZUR SYNCHRONISATION VON MULTIMEDIA-BROADCAST/MULTICAST
PROCÉDÉ DE SYNCHRONISATION DE LA DIFFUSION/MULTIDIFFUSION MULTIMÉDIA

(30) Priority: 18.07.2007 CN 200710130425
(43) Date of publication of application: 28.04.2010
(73) Proprietor: ZTE Corporation, Shenzhen, Guangdong 518057 (CN)
(72) Inventor: KE, Zunyou, Shenzhen Guangdong 518057 (CN)
(74) Representative: Pallini, Diego
(86) International application number: PCT/CN2007/003917
(87) International publication number: WO 2009/009939

(56) References cited:
- EP-A2- 1 916 860
- WO-A1-93/25012
- WO-A1-2007/082953
- WO-A2-2008/060796
- CN-A- 1 674 693
- CN-A- 1 709 003
- CN-A- 1 832 479
- CN-A- 101 043 653
- CN-A- 101 051 889
- US-A- 5 485 632
- US-A1- 2005 094 618
- US-A1- 2005 163 064

## Description

### Technical Field

The invention relates to a mobile communication value-added service, and in particular, to a synchronization method for multimedia broadcast/multicast.

### Background of the Invention

The multimedia service is a service form much loved by most users, and its development potentiality for service application is enormous.

Multimedia broadcast/multicast service (abbreviated to MBMS) and broadcast and multicast service (abbreviated to BCMCS) technology refers to a point-to-multipoint service in which data is sent from one data source to a plurality of users and network resources sharing, including mobile core network and access network resources sharing, especially air interface resources sharing, may be implemented.

At present, because a terminal moves in a network, seamless handover on a border of adjacent cells and efficient service data receiving are required to be ensured for the terminal which receives data. For the MBMS service, service data is transmitted from a broadcast multicast service center according to a transmission chain of BM-SC→GGSN→SGSN→RNC→NodeB; and in the BCMCS architecture, it is transmitted according to a transmission chain of BCMCS CS/Controller→PDSN/BSN→BSC/PCF; where the GGSN is the abbreviation of Gateway GPRS Support Node, GPRS is the abbreviation of General Packet Radio Service, SGSN is the abbreviation of Serving GPRS Support Node, CS/Controller is the abbreviation of Content Server/Controller, PDSN is the abbreviation of Packet Data Serving Node, BSN is the abbreviation of Broadcast Serving Node, BSC is the abbreviation of Base Station Controller, and PCF is the abbreviation of Packet Control Function. However, in all these system architectures, coverage areas of base stations are limited, and transmission of same service data in different cells can not be completely synchronized at present.

For example, the solution disclosed by US patent application published under n° 2005/163064A1 does not solve the above problem.

US2005/163064A1 discloses a synchronization apparatus and a method for group broadcasting a service stream in a mobile communication system. The PCF 340 calculates the transmission delay time for all ANTSs and determines the wireless transmission time of each packet based on an ANTS having the largest delay time. Then the PCF 340 transfers packets including the wireless transmission time information of the packet to each of the ANTSs. Each of the ANTSs calculates the difference between the time at which the packet have arrived at each of the ANTSs and the wireless transmission time of the corresponding packet, and reports the calculated difference to the PCF 340. In US 2005/163064 A1, PCF 340 provides transmission delay time for all ANTSs and transfers packets including the wireless transmission time information of packet to each of the ANTSs, i.e., synchronous transmission of data is achieved by each of the ANTSs, therefore, when a terminal moves across PCF or PDSN in a wireless network, D4 can not guarantee that the services are not interrupted when the terminal is handover.
US2005/094618A1 discloses a method of synchronizing broadcast streams in multiple soft handoff sectors. The base stations use the time stamps to calculate a frame transmission start time and start position for the data packets.

### Summary of the Invention

The technical problem to be solved by the present invention is to provide a synchronization method for multimedia broadcast/multicast such that synchronous transmission of multimedia broadcast/multicast service data in different cells can be ensured.

In order to solve the above technical problem, the present invention provides a synchronization method for multimedia broadcast/multicast, comprising steps of:
1.1) transmitting, by a service center (3), synchronization information while transmitting service data; and
1.2) receiving, by each of a plurality of terminal node controllers (2), the service data and transmitting the service data according to the corresponding synchronization information;
and wherein, in the step 1.1), the synchronization information contains a system time stamp and a transmission time delay parameter.

According to the synchronization method provided by the present invention, the service center (3) and the plurality of terminal node controllers (2) are synchronized with a same system clock.

The synchronization method provided by the present invention may further comprise:
in the step 1.2), after the service data is received, extracting, by each of the plurality of terminal node controllers (2), the system time stamp and transmitting the service data according to the transmission time delay parameter.

The synchronization method provided by the present invention may further comprise:
setting, by each of the plurality of terminal node controllers (2), a default transmission time delay parameter;
in the step 1.1), the synchronization information containing only a system time stamp; and
in the step 1.2), after the service data is received, extracting, by each of the plurality of terminal node controllers (2), the system time stamp and transmitting the service data according to the default transmission time delay parameter.

According to the synchronization method provided by the present invention, the transmission time delay parameter is greater than or equal to a maximum actual receiving time delay of the plurality of terminal node controllers (2).

The synchronization method provided by the present invention may further comprise:
storing and setting, by the service center (3), the transmission time delay parameter, a multimedia multicast/broadcast service channel and area information thereof, and associating the transmission time delay parameter with the multimedia multicast/broadcast service channel and the area information thereof.

According to the synchronization method provided by the present invention, the transmission time delay parameter corresponding to each multimedia multicast/broadcast service channel is the same or different.

According to the synchronization method provided by the present invention, the service center (3) is a broadcast multicast service center for a multimedia broadcast/multicast service and/or a content server/controller for a broadcast and multicast service; and the terminal node controller (2) is a radio network controller, a base station controller, a packet control function, or a combination thereof.

The synchronization method provided by the present invention may further comprise:
the received service data and the synchronization information being packaged transmission data; and
in the step (1.2), when the service data is received, buffering and repackaging the service data.

According to the synchronization method provided by the present invention, the synchronization information together with the service data are encapsulated in a packet; and the service is a multimedia broadcast/multimedia service or a broadcast and multicast service.

The synchronization method for multimedia broadcast/multicast in accordance with the present invention uses the system clock and synchronization information to achieve synchronous transmission of service data by terminal node controllers and ensures seamless handover on a border of adjacent cells and efficient data receiving by a terminal when it moves in a wireless network.

### Brief Description of the Drawings

The present invention will be described in detail below in conjunction with the accompanying drawings and specific embodiments.
FIG. 1 is a flow chart of a synchronization method for multimedia broadcast/multicast in accordance with the present invention;
FIG. 2 is a schematic diagram illustrating a structure of a system applying a method in accordance with the present invention;
FIG. 3 is a schematic diagram illustrating a synchronization time relation in a method in accordance with the present invention; and
FIG. 4 is a schematic diagram illustrating a hierarchical architecture of a system applying a method in accordance with the present invention.

### Preferred Embodiments of the Invention

Firstly, a synchronization method in accordance with the present invention will be described below.

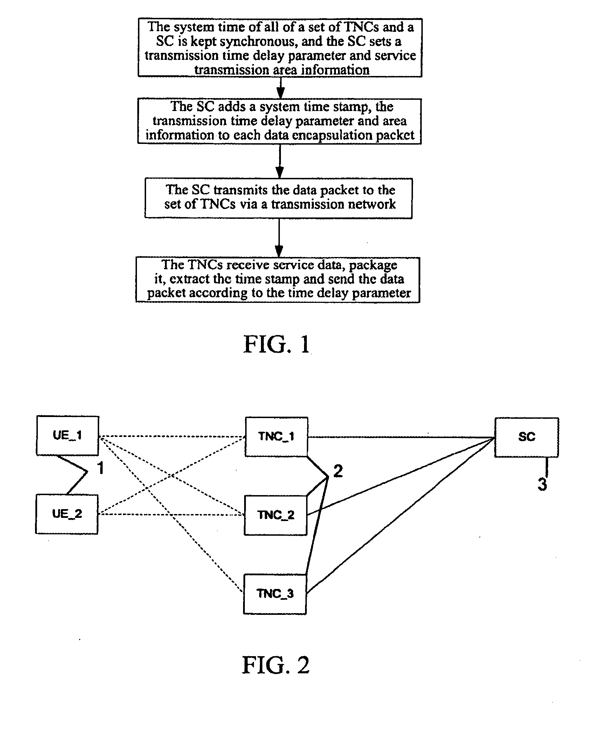

As shown in FIG. 1, in which the terminal node controller (abbreviated to TNC) is an abstract general designation of RNC and BSC/PCF, and the service center (abbreviated to SC) is an abstract general designation of MBMS BM-SC and BCMCS Controller/CS, the synchronization method comprises the following steps:
(1) The system time of all of a set of TNCs and a SC is kept synchronous, and the SC sets a transmission time delay parameter and service transmission area information.
(2) The SC adds a system time stamp and the transmission time delay parameter to each data encapsulation packet, where for data of the same service, the transmission time delay parameter is the same.
(3) The SC transmits the data packet to the set of TNCs via a transmission network.
(4) The TNCs receive service data, package it, extract the time stamp and send the data packet according to the transmission time delay parameter.

As described in step (1), the system time of all the TNCs and the SC are synchronized constantly with a system clock source such that all the TNCs and the SC have the same clock reference.

Further, the SC provides a function of setting and storing the transmission time delay parameter and service transmission area information. A multimedia multicast/broadcast service channel is associated with the service transmission area information (e.g., the set of TNCs corresponding to the service channel) and the transmission time delay parameter.

Further, the transmission time delay parameter is set to be no less than actual delays of all the TNCs in the set.

As described in step (2), the service data encapsulation packet sent by the SC contains the system time stamp and the transmission time delay parameter in addition to multimedia data.

Further, the data packet may contain all or part of such type of information, that is, such type of information may be transmitted together or separately in the data packets.

Further, a transmission unit is informed of the service transmission area information by the SC through a session message.

As described in step (3), the set of TNCs have specified area information of the service which is set in the SC and corresponds to one or a plurality of multimedia broadcast/multicast service channels.

As described in step (4), the TNCs receive data from a transport layer.

Further, if the data received by the TNC is packaged data and includes packets or fragments in intermediate links of the transmission network, the TNC may buffer its packets and form an original data encapsulation packet equivalent to the SC on a service application layer.

Further, the TNC extracts the time stamp and transmits the data encapsulation packet according to the transmission time delay parameter.

Secondly, the present invention will be further described in conjunction with specific embodiments.

### (I) System

As shown in FIG. 2, a multimedia broadcast system mainly comprises entities of a service center (SC) 3, a plurality of terminal node controllers (TNC) 2 and a plurality of user equipments (abbreviated to UE) 3. The SC is connected with the TNCs by a transmission unit (including transmission network elements and a network), and the TNCs are connected with the UEs by a wireless access network.

Wherein, the SC provides a function of setting and storing a transmission time delay parameter and service transmission area information. A multimedia multicast/broadcast service channel is associated with the service transmission area information and the transmission time delay parameter. A service data encapsulation packet sent by the SC contains a system time stamp and the transmission time delay parameter in addition to multimedia data.

If data received by the TNC is packaged data and includes packets and fragments in intermediate links of the transmission network, the TNC may buffer its packets and form an original data encapsulation packet equivalent to the SC on a service application layer. The TNC extracts the time stamp, and sends the data encapsulation packet according to the time delay parameter.

The UE passes a certificate authentication through a session, and then receives, buffers and presents a multimedia broadcast/multicast program.

### (II) Synchronization

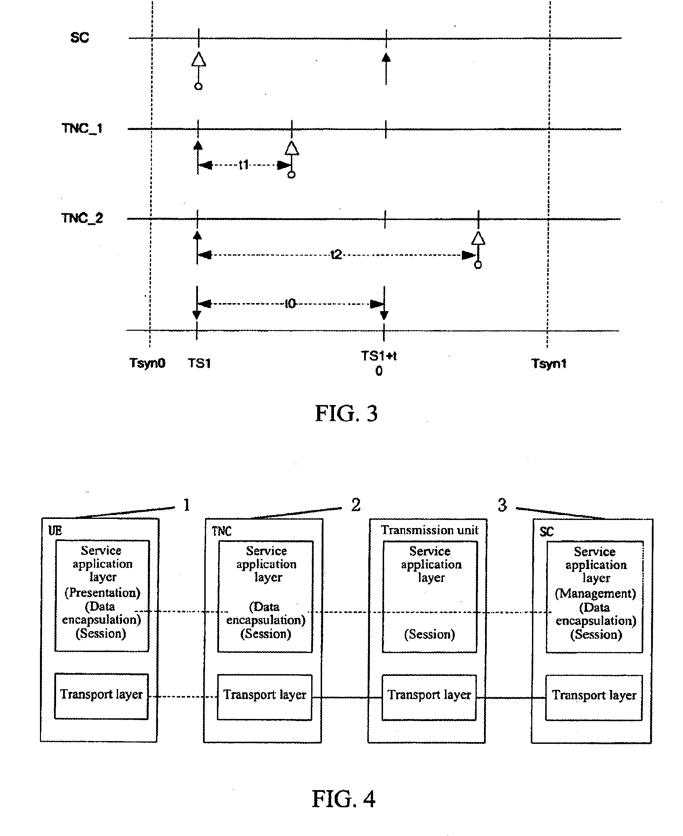

As shown in FIG. 3, the time involved with synchronous transmission of data by TNCs includes following aspects:
(1) The system time of the TNCs and a SC in the entire network is kept synchronous;
   Generally, the system time is synchronized constantly with the same clock source. The synchronization may be performed periodically or may be triggered by an event. The Tsyn0 and Tsyn1 in the figure represent synchronization time.
(2) The SC sets properly the transmission time delay parameter for each service channel.
   In the figure, actual delays of TNC1 and TNC2 are shown as t1 and t2 respectively. Assuming that the transmission time delay parameter set by the system is t0, then the data packet sent at the time stamp of TS1 1 by the SC should be transmitted at TS+t0 by the TNCs.
   On the other hand, the time when the data packet is actually received by TNC1 and TNC2 is respectively TS1+t1 and TS1+t2.
   If t1 < t0 < t2, TNC2 is unable to transmit the data packet on time, while TNC1 can transmit the data packet normally.
   Therefore, t0 ≥ tn (n = 1, 2, 3, ...) should be set, where tn is an actual delay corresponding to each of the TNCs.
(3) The SC adds a system time stamp and the transmission time delay parameter to each data encapsulation packet.

Multimedia broadcast/multicast service data is transmitted using the User Datagram Protocol (UDP) based on IP bearer. The SC uses an agreed format to encapsulate data such that the UEs and TNCs can identify and parse it.

The format of the data packet is shown in a table as follows:

| data packet description | | interpretation |
|---|---|---|
| SequenceNumber | | a sequence number of the data packet |
| TimeStamp | | a time stamp |
| TimeDelay | | transmission time delay |
| DataUnitNumber | | the number *n* of data units |
| for(i=0; i<n; ++i) | | |
| { | | |
| | DataLength | length *m* of service data unit *i* |
| | ServiceData[] | data of service data unit *i* |
| } | | |

Each data packet carries its own time stamp.

The transmission time delay parameter has a default value set at the TNCs, and if a value of this parameter sent by the SC is received, then the received value is used. For each service channel, the SC may set a different transmission time delay parameter or may set a unified applicable transmission time delay parameter.

During the transmission, the transmission time delay parameter may be changed at any time.

The service data unit contains data of a value-added service or streaming media service, or the set area information, etc.

### (III) Critical implementation

As shown in FIG. 4, a hierarchical architecture in accordance with the method is described.

A service application layer is independent of a transport layer. The transport layer of a TNC implements conversion between a fixed network and a wireless network.

A transmission unit acquires service transmission area information, such as a set of TNCs corresponding to a service channel, through a session.

The TNC acquires service data, including a value-added service media data packet, a streaming media data packet, a time stamp or a transmission time delay parameter, etc., by data encapsulation equivalent to the SC.

In view of all of the above, with the method in accordance with the present invention, synchronous transmission of data by TNCs in a multimedia broadcast system can be achieved so as to ensure seamless handover on a border of adjacent cells and efficient data receiving by a terminal when it moves in the network.

### Industrial Applicability

A synchronization method for multimedia broadcast/multicast in accordance with the present invention uses the system clock and synchronization information to achieve synchronous transmission of service data by terminal node controllers and ensures seamless handover on a border of adjacent cells and efficient data receiving by a terminal when it moves in a wireless network.

## Claims

1. A synchronization method for multimedia broadcast/multicast, comprising the steps of:
1.1) transmitting, by a service center (3), synchronization information while transmitting service data; and
1.2) receiving, by each of a plurality of terminal node controllers (2), the service data and transmitting the service data according to the corresponding synchronization information;
wherein, in the step 1.1), the synchronization information contains a system time stamp and a transmission time delay parameter.

2. The synchronization method according to claim 1, wherein the service center (3) and the plurality of terminal node controllers (2) are synchronized with a same system clock.

3. The synchronization method according to claim 2, further comprising:
in the step 1.2), after the service data is received, extracting, by each of the plurality of terminal node controllers (2), the system time stamp and transmitting the service data according to the transmission time delay parameter.

4. The synchronization method according to claim 2, further comprising:
setting, by each of the plurality of terminal node controllers (2), a default transmission time delay parameter;
in the step 1.1), the synchronization information containing only a system time stamp; and
in the step 1.2), after the service data is received, extracting, by each of the plurality of terminal node controllers (2), the system time stamp and transmitting the service data according to the default transmission time delay parameter.

5. The synchronization method according to claim 3 or 4, wherein the transmission time delay parameter is greater than or equal to a maximum actual receiving time delay of the plurality of terminal node controllers (2).

6. The synchronization method according to claim 3, further comprising:
storing and setting, by the service center (3), the transmission time delay parameter, a multimedia multicast/broadcast service channel and area information thereof, and associating the transmission time delay parameter with the multimedia multicast/broadcast service channel and the area information thereof.

7. The synchronization method according to claim 6, wherein the transmission time delay parameter corresponding to each multimedia multicast/broadcast service channel is the same or different.

8. The synchronization method according to claim 1, wherein the service center (3) is a broadcast multicast service center for a multimedia broadcast/multicast service and/or a content server/controller for a broadcast and multicast service; and the terminal node controller (2) is a radio network controller, a base station controller, a packet control function, or a combination thereof.

9. The synchronization method according to claim 1, further comprising:
the received service data and the synchronization information being packaged transmission data; and
in the step (1.2), when the service data is received, buffering and repackaging the service data.

10. The synchronization method according to claim 1, wherein the synchronization information together with the service data are encapsulated in a packet; and the service is a multimedia broadcast multicast service or a broadcast and multicast service.

## Patentansprüche

1. Synchronisationsverfahren für ein Multimedia-Broadcast/Multicast, umfassend die Schritte, dass:
1.1) durch eine Dienstzentrale (3) eine Synchronisationsinformation übertragen wird, während Dienstdaten übertragen werden; und
1.2) durch jeden mehrerer Endknotencontroller (2) die Dienstdaten empfangen werden und die Dienstdaten gemäß der entsprechenden Synchronisationsinformation übertragen werden;
wobei in Schritt 1.1) die Synchronisationsinformation einen Systemzeitstempel und einen Übertragungszeit-Verzögerungsparameter enthält.

2. Synchronisationsverfahren nach Anspruch 1,
wobei die Dienstzentrale (3) und die mehreren Endknotencontroller (2) mit einem gleichen Systemtakt synchronisiert werden.

3. Synchronisationsverfahren nach Anspruch 2, das ferner umfasst, dass:
in Schritt 1.2) nach dem Empfangen der Dienstdaten durch jeden der mehreren Endknotencontroller (2) der Systemzeitstempel extrahiert wird und die Dienstdaten gemäß dem Übertragungszeit-Verzögerungsparameter übertragen werden.

4. Synchronisationsverfahren nach Anspruch 2, das ferner umfasst, dass:
durch jeden der mehreren Endknotencontroller (2) ein Standardübertragungszeit-Verzögerungsparameter festgelegt wird;
in Schritt 1.1) die Synchronisationsinformation nur einen Systemzeitstempel enthält; und
in Schritt 1.2) nach dem Empfangen der Dienstdaten durch jeden der mehreren Endknotencontroller (2) der Systemzeitstempel extrahiert wird und die Dienstdaten gemäß dem Standardübertragungszeit-Verzögerungsparameter übertragen werden.

5. Synchronisationsverfahren nach Anspruch 3 oder 4,
wobei der Übertragungszeit-Verzögerungsparameter größer oder gleich einer maximalen tatsächlichen Empfangszeitverzögerung der mehreren Endknotencontroller (2) ist.

6. Synchronisationsverfahren nach Anspruch 3, das ferner umfasst, dass:
durch die Dienstzentrale (3) die Übertragungszeit-Verzögerungsparameter, ein Multimedia-Multicast/Broadcast-Dienstkanal und eine Bereichsinformation hiervon gespeichert und festgelegt werden und der Übertragungszeit-Verzögerungsparameter mit dem Multimedia-Multicast/Broadcast-Dienstkanal und der Bereichsinformation hiervon in Verbindung gebracht wird.

7. Synchronisationsverfahren nach Anspruch 6,
wobei der Übertragungszeit-Verzögerungsparameter, der jedem Multimedia-Multicast/Broadcast-Dienstkanal entspricht, der gleiche oder unterschiedlich ist.

8. Synchronisationsverfahren nach Anspruch 1,
wobei die Dienstzentrale (3) eine Broadcast-Multicast-Dienstzentrale für einen Multimedia-Broadcast/Multicast-Dienst und/oder ein Content-Server/Controller für einen Broadcast- und Multicast-Dienst ist; und der Endknotencontroller (2) ein Funknetzcontroller, ein Basisstationscontroller, eine Paketsteuerfunktion oder eine Kombination hiervon ist.

9. Synchronisationsverfahren nach Anspruch 1, das ferner umfasst, dass:
die empfangenen Dienstdaten und die Synchronisationsinformation gepackte Übertragungsdaten sind; und
in Schritt (1.2), wenn die Dienstdaten empfangen werden, die Dienstdaten gepuffert und neu gepackt werden.

10. Synchronisationsverfahren nach Anspruch 1,
wobei die Synchronisationsinformation zusammen mit den Dienstdaten in einem Paket eingeschlossen ist; und der Dienst ein Multimedia-Broadcast/Multicast-Dienst oder ein Broadcast- und Multicast-Dienst ist.

## Revendications

1. Procédé de synchronisation pour une radiodiffusion/multidiffusion multimédia, comprenant les étapes de :
1.1) transmission, par un centre de service (3), d'informations de synchronisation tout en émettant des données de service ; et
1.2) réception, par chacun d'une pluralité de contrôleurs de noeud terminal (2), des données de service et transmission des données de service selon les informations de synchronisation correspondantes ;
dans lequel, dans l'étape 1.1), les informations de synchronisation contiennent une estampille temporelle de système et un paramètre de retard de temps de transmission.

2. Procédé de synchronisation selon la revendication 1, dans lequel le centre de service (3) et la pluralité de contrôleurs de noeud terminal (2) sont synchronisés avec une même horloge système.

3. Procédé de synchronisation selon la revendication 2, comprenant en outré :
dans l'étape 1.2), après réception des données de service, l'extraction, par chacun d'une pluralité de contrôleurs de noeud terminal (2), de l'estampille temporelle de système et la transmission des données de service selon le paramètre de retard de temps de transmission.

4. Procédé de synchronisation selon la revendication 2, comprenant en outre :
le réglage, par chacun de la pluralité de contrôleurs de noeud terminal (2), d'un paramètre de retard de temps de transmission par défaut ;
dans l'étape 1.1), le fait que les informations de synchronisation contiennent uniquement une estampille temporelle de système ; et
dans l'étape 1.2), après réception des données de service, l'extraction, par chacun de la pluralité de contrôleurs de noeud terminal (2), de l'estampille temporelle de système et la transmission des données de service selon le paramètre de retard de temps de transmission par défaut.

5. Procédé de synchronisation selon la revendication 3 ou 4, dans lequel le paramètre de retard de temps de transmission est supérieur ou égal à un retard de temps de réception réel maximal de la pluralité de contrôleurs de noeud terminal (2).

6. Procédé de synchronisation selon la revendication 3, comprenant en outre :
le stockage et le réglage, par le centre de service (3), du paramètre de retard de temps de transmission, d'un canal de service de multidiffusion/radiodiffusion multimédia et d'informations de zone de celui-ci, et l'association du paramètre de retard de temps de transmission avec le canal de service de multidiffusion/radiodiffusion multimédia et les informations de zone de celui-ci.

7. Procédé de synchronisation selon la revendication 6, dans lequel le paramètre de retard de temps de transmission correspondant à chaque canal de service de multidiffusion/radiodiffusion multimédia est identique ou différent.

8. Procédé de synchronisation selon la revendication 1, dans lequel le centre de service (3) est un centre de service de radiodiffusion/multidiffusion pour un service de radiodiffusion/multidiffusion multimédia et/ou un serveur/contrôleur de contenu pour un service de radiodiffusion et multidiffusion ; et le contrôleur de noeud terminal (2) est un contrôleur de réseau radio, un contrôleur de station de base, une fonction de contrôle de paquet, ou une combinaison de ceux-ci.

9. Procédé de synchronisation selon la revendication 1, comprenant en outre :
le fait que les données de service reçues et les informations de synchronisation soient des données de transmission en paquets ; et
dans l'étape (1,2), lorsque les données de service sont reçues, la mise en mémoire tampon et la remise en paquets des données de service.

10. Procédé de synchronisation selon la revendication 1, dans lequel les informations de synchronisation ainsi que les données de service sont encapsulées dans un paquet ; et le service est une radiodiffusion/multidiffusion multimédia ou un service de radiodiffusion et multidiffusion.
